# EUROPEAN PATENT APPLICATION

(11) **EP 4 592 107 A1**
(43) Date of publication of application: **30.07.2025**
(21) Application number: 25315020.5
(22) Date of filing: 22.01.2025
(51) Int. Cl.: B60H 1/00

(54) **IMPROVED AIR DISTRIBUTION SYSTEM FOR A CONDITIONING SYSTEM FOR A PUBLIC TRANSPORT VEHICLE**

(30) Priority: 24.01.2024 IT 202400001314
(71) Applicant: IVECO FRANCE S.A.S., 69200 Vénissieux (FR)
(72) Inventor: Bonnet, Yoan, 69200 VENISSIEUX (FR)
(74) Representative: Studio Torta S.p.A.

(57) **Abstract**

Distribution system (6) for distributing an airflow provided by a conditioning system of a vehicle into an inner space of the vehicle, the distribution system (6) comprising at least two conduits (7', 7'') configured to fluidly connect the conditioning system to a voussoir assembly (10) provided with openings (27, 28) to deliver the airflow to the inner space, said at least two conduits (7', 7'') being configured to divide the airflow entering into these latter in different proportion between a front and a rear portion of the vehicle.

## Description

### CROSS-REFERENCE TO RELATED APPLICATIONS

This patent application claims priority from Italian patent application no. 102024000001314 filed on January 24, 2024, the entire disclosure of which is incorporated herein by reference.

### TECHNICAL FIELD

The present invention concerns an air distribution system for a public transport vehicle.

The present invention finds its preferred, although not exclusive, application in a conditioning system of a bus. Reference will be made to this application by way of example below.

### BACKGROUND OF THE INVENTION

Conditioning system is one of the key factors while considering the comfort during the use of a public transport vehicle.

Indeed, it is known that it is important to provide the conditioned air flow in the inner space of the vehicle that houses the passengers in the most possible diffused way.

However, the feeding of conditioned air flow within the aforementioned space is a challenging operation.

First, the conditioned airflow is provided by a conditioning machine that is usually housed by the roof of the vehicle. Therefore, the first need is to provide the conditioned airflow from the conditioning machine within the inner space.

Second, there is the need of providing the conditioned airflow in different points of the inner space in order to avoid providing excessively hot/cold airflow in a single point and with insignificant effects in the zones of the inner space that are distanced from such single feeding point.

In order to distribute the conditioned air within the inner space of the vehicle it is known to provide conduits within the voussoirs or in the ceiling assembly. However, such plurality of conduits clearly increases manufacturing assembly time and related costs.

Moreover, the plurality of conduits clearly leads to a complicated structure that needs time to be inspected for its maintenance.

Furthermore, the presence of a plurality of conduits clearly reduces the free available space within the inner space of the bus.

Therefore, the need is felt to provide an air conditioning system that allows a uniform distribution of the conditioned air within the inner space of a public transport vehicle without increasing costs and reducing useful space.

An aim of the present invention is to satisfy the above-mentioned needs in a cost-effective and optimized manner.

### SUMMARY OF THE INVENTION

The aforementioned aim is reached by a distribution system as claimed in the appended set of claims that are integral part of the present description.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective view of a vehicle comprising a distribution system according to the invention;
- Figure 2 is a perspective view of a portion of the distribution system;
- Figure 3 is a perspective view of a further portion of the distribution system;

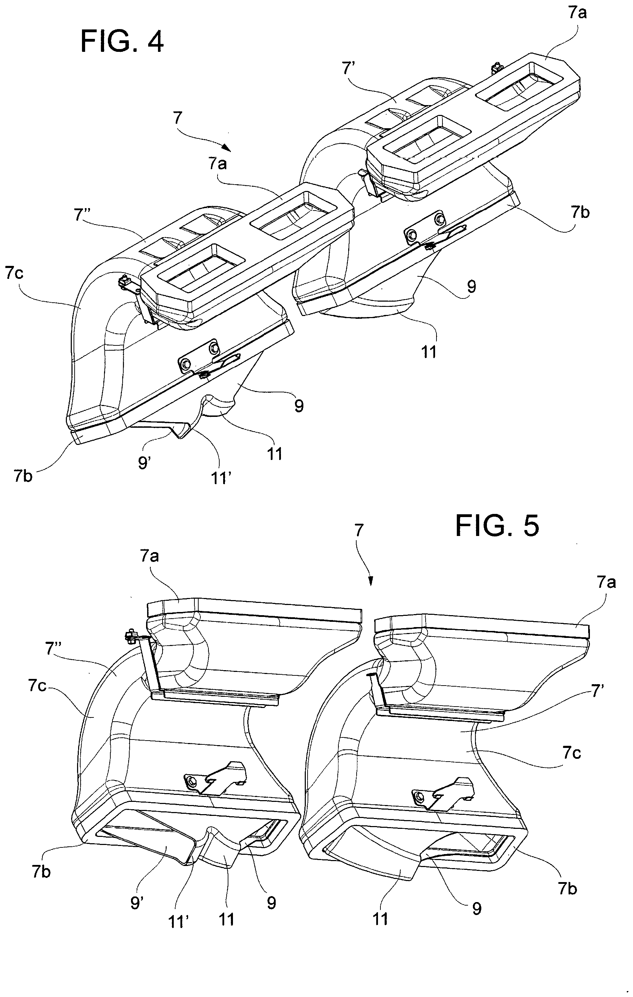

- Figures 4 and 5 are perspective view at different inclinations of a further portion of the distribution system;
- Figure 6 is a perspective view of a further portion of the distribution system in a first operative condition; and
- Figure 7 is a perspective view of the portion of Figure 6 in a second operative condition.

### DETAILED DESCRIPTION OF THE INVENTION

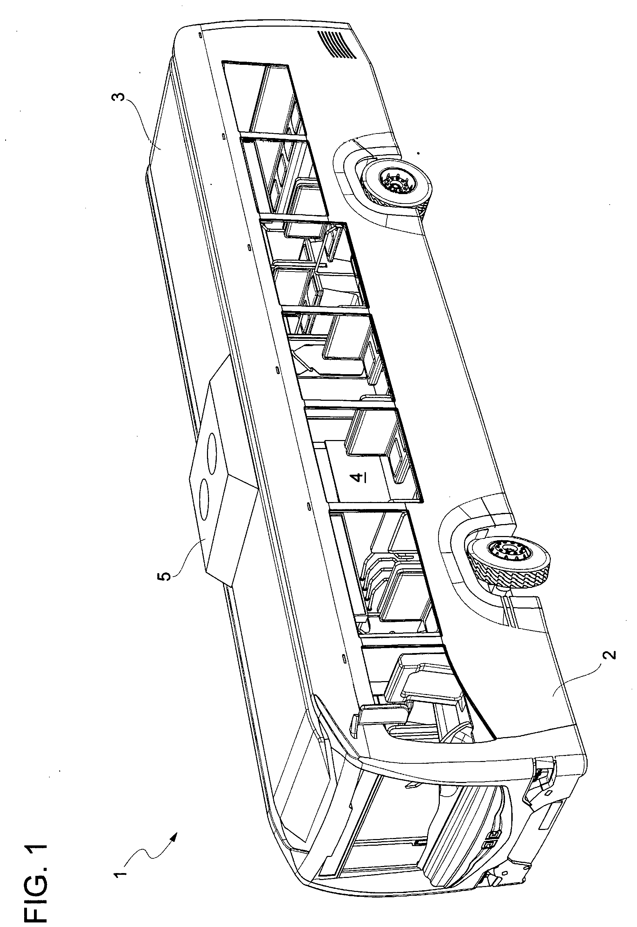

Figure 1 discloses a public transport vehicle 1 such as a bus comprising a plurality of walls, such as lateral walls 2 and a roof 3 connected together to define a space 4 configured to house passengers.

Vehicle 1 is movable on ground, e.g. by wheels and therefore related with a propulsion system configured to allow its motion and to provide energy for allowing operation of other operational elements.

The vehicle 1 comprises an air conditioning system 5, preferably carried by roof 3, and configured to use energy to condition the air within the space 4.

As per se known conditioning system 5 comprises a refrigeration cycle apparatus configured to operate to cool down or heat up air to be provided within the inner space 4. Such air can be aspirated by the environment or by the inner space 4 or a mix between the aforementioned conditions.

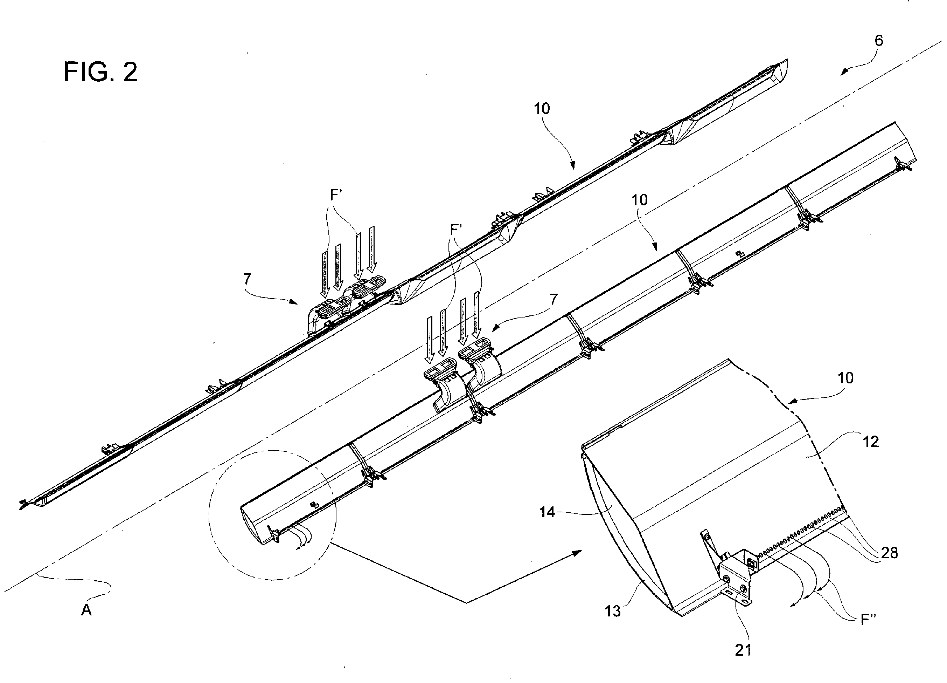

In figure 2 it is shown a distribution system 6 configured to allow distribution of a conditioned airflow F' towards the inner space 4 of the vehicle 1.

Distribution system 6 comprises essentially a pair of voussoirs assemblies and a feeding unit 7 for each voussoir assembly. In detail, voussoirs, as known, are arc-shaped elements that are placed in the inner space, in detail in the corner of the ceiling assembly of the vehicle 1.

The voussoirs assembly extends along longitudinal axis A of the vehicle and the feeding unit 7 is configured to allow fluidic communication between the voussoirs assembly and the conditioning system 5.

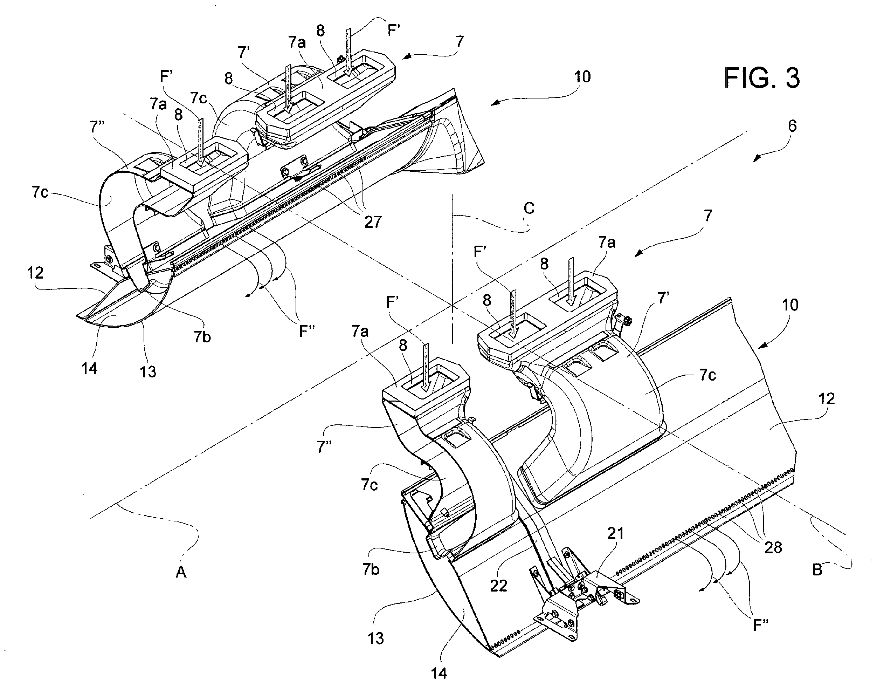

Making reference to the feeding unit 7 (see figure 3), it is noticed that each feeding unit 7 is placed in an intermediate position along voussoirs assemblies with respect to longitudinal axis A.

Preferably, the feeding unit 7 comprises a first and a second feeding conduit 7', 7'' adjacent along longitudinal A direction.

As best shown in figured 4 and 5, each feeding conduit 7', 7'' comprises a top portion 7a fluidly connected to the conditioning system 5, a bottom portion 7b fluidly connected to the voussoir assembly and an intermediate portion 7c connecting the top and the bottom portion 7a, 7b.

In detail, each feeding conduit 7', 7'' therefore extends along a vertical axis C though the roof 3 of the vehicle 1 and along a transversal axis B both perpendicular to longitudinal axis A.

The top portion 7a is provided with at least one opening 8 configured to be fluidly connected to a delivery port of the conditioning system 5, therefore is configured to receive the conditioned airflow F' by this latter.

The intermediate portion 7c has substantially a curved shape cross-section in particular an "S" shaped cross-section in a transversal plane with respect to longitudinal axis A.

More in detail, the passage defined in the intermediate portion 7c has a variable cross-section, more in details the cross-section enlarges from the top portion 7a to the bottom portion 7b.

In detail the bottom portion 7b defines at least an opening 9, 9' for directing the conditioned airflow F' in the voussoir 8, in detail along the longitudinal axis A direction.

In detail, one conduit 7' defines a single opening 9 while the other conduit 7" defines a pair of openings 9, 9'.

The first feeding conduit 7' is placed preferably rear along longitudinal axis A with respect to the driving direction of the vehicle while the second feeding conduit 7" is therefore placed front.

The first conduit 7' preferably defines a single opening 9 configured to direct the conditioned airflow F' in the rear portion of the voussoir 8 while the second conduit 7'' defines a pair of openings 9, 9', a first one is configured to direction a portion of the conditioned airflow F' in the rear portion of the voussoir 8 while the second opening 9' is configured to direction a portion of the conditioned airflow F' towards a front portion of the voussoir 8.

In detail, each opening 9, 9' is defined by deflector means 11, 11' configured to direction the air in the above-described direction.

In detail, the opening 9 of the first conduit 7' is defined by a single deflector 11 having a curved shape defining therefore a "C"-opening while the pair of openings 9, 9' of the second conduit 7" is defined by a pair of deflectors 11, 11', preferably realized as one piece, configured to have each a curved shape, one opposite to the other.

In particular, the inclination of deflector/s 11, 11' and the number of openings 9, 9' are dependent on the position of the first and second conduits 7', 7'' on the roof along the longitudinal axis A direction.

With reference to figures 2, 3, 6 and 7 each voussoir assembly comprises a plurality of segments of voussoir 10 aligned adjacent along longitudinal axis A.

Each voussoir 10 comprises an inner cover 12 and an outer cover 13 that are coupled together to delimit a distribution space 14. The space 14 is fluidly connected via openings as defined hereinafter to the inner space 4 of the vehicle 1.

The lower portions 7b of the first and second conduits 7', 7'' are housed within the inner space 4. In particular, the lower portions 7b pass through openings (not shown) shaped to allow their housing in a tight manner through the outer cover 13.

In detail, the lower portions 7b have a cross-section lower with respect to the intermediate portion 7c in order to allow the insertion within the aforementioned openings in the outer cover 13 in an airtight manner and to allow an easy extraction/movement of the voussoir, if needed, as shown hereinafter. Preferably also the upper portion 7a as shaped in such way to allow fluidic connection to the conditioning unit 5.

In detail, the inner cover 12 and the outer cover 13 may be realized as one piece and more preferably in polymeric material.

Preferably, inner cover 12 has a convex shape faced to inner space 4 of the vehicle 1 while the outer cover 13 has a concave shape with respect to distribution space 14.

In detail, the inner cover 12 and the outer cover 14 are connected together in an upper portion 12a and in a lower portion 13a.

In detail, the support frame 20 is fixed to at least one between the walls 2 and/or to the roof 3 of the vehicle 1 and the voussoir 10 is carried by the support frame 20 in order to assume a first configuration, closed, wherein it is fixed to the support frame 20 in an air tight manner and a second configuration, opened, wherein it is carried in a rotatable free manner by a portion of the support frame.

In detail, the frame 20 can be fixed in the corner between the walls 2 and the roof 3 of the vehicle.

Accordingly, the support frame 20 comprises a comprises a fixing portion 21 configured to allow the fixation to the aforementioned wall 2/roof 3 and a coupling portion 22 configured to cooperate with the voussoir 10.

In detail, the coupling portion 22 comprises an anchoring portion 22' and a contact portion 22''. Preferably, the anchoring portion 22' and the contact portions 22'' have each a shape that is concave with respect to the other one.

In detail, the anchoring portion 22' has a segmented shape defining an angle, i.e. a concave shape, towards the contact portion 22'' while the contact portion 22'' is preferably curved defining a concavity towards the anchoring portion 22'.

Both the anchoring portion 22' and the contact portion 22" have a plate shape, i.e. they have a substantially rectangular cross-section.

Further in detail, the anchoring portion 22' and the contact portion 22'' are connected together into an upper portion 22a and a lower portion 22b along vertical axis C.

Moreover, the anchoring portion 22' and the contact portion 22'' are connected together between the support and the lower portions 22a, 22b via a plurality of joint portions 22"'. The anchoring, contact and joint portions 22', 22'', 22‴ defines a sort of reticular structure of the coupling portion 22.

Preferably, upper portion 22a defines a curved shape 23 configured to cooperate at contact with a corresponding one of the voussoir 10 to define a hinge, as better described hereinafter, and a ridge 24 extending in correspondence of a median plane of the coupling portion 22, i.e. parallel to a plane defined by vertical and transversal axis C, B.

The lower portion 22b instead defines a plate shape 25 and itself defines a ridge 26 extending in correspondence of a median plane of the coupling portion 22, i.e. parallel to a plane defined by vertical and transversal axis C, B.

Referring back to the voussoir 10, the upper portion 12a is coupled to the upper portion 22a of the coupling portion 12 by a hinge coupling as described in the following configured to allow a rotation of the voussoir 10 about an axis parallel to longitudinal axis A while the lower portion 13a is configured to be selectively fixed to the support frame 20, for instance to the fixing portion 21, e.g. by fixing means such as screws.

Accordingly, the upper portion 12a of the inner cover 12 defines a hook portion 29 dimensioned to be housed about the curved shape 23 of the upper portion 22a.

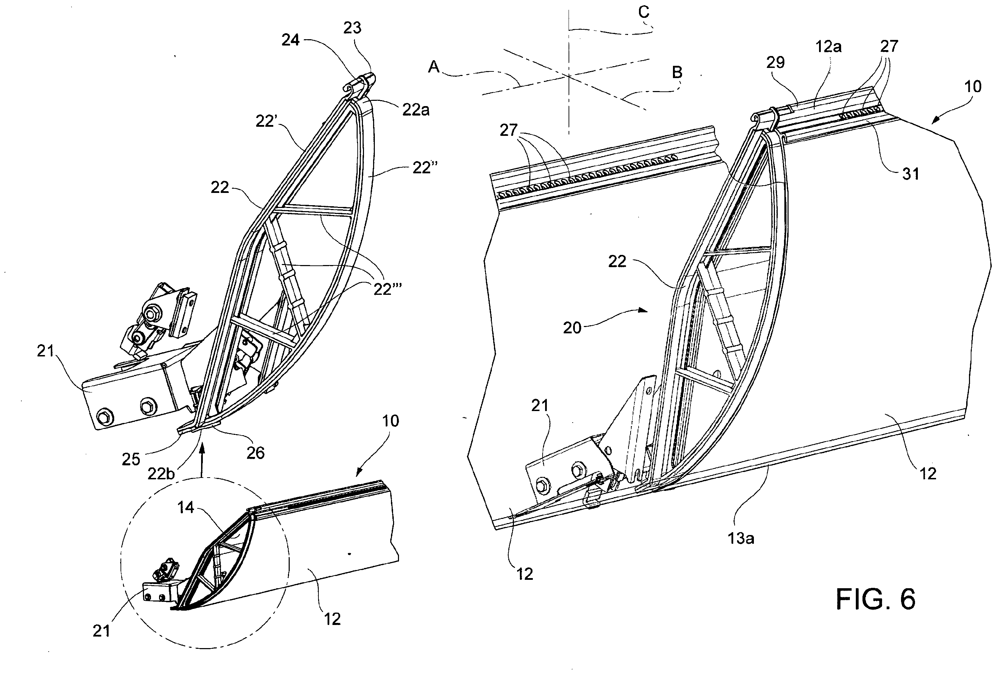

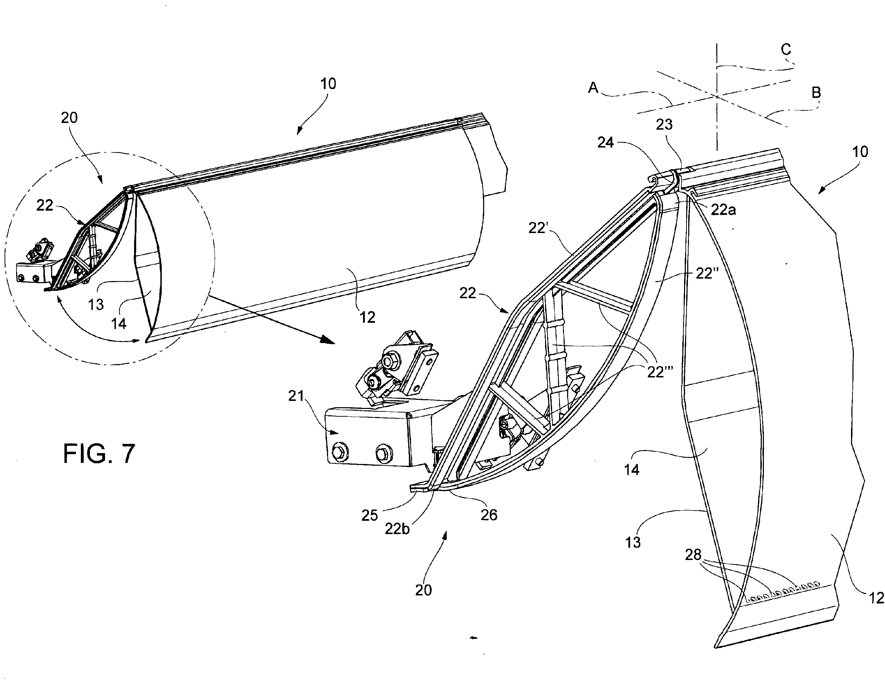

In detail, as better shown in figures 6 and 7 the inner cover 12 extends along longitudinal axis A direction more than the outer cover 13 so that a portion of the inner cover 12, in a first configuration as shown in figure 6 can cooperate at contact in an airtight manner with the contact portion 22'' between the upper and lower portions 22a, 22b thereof, thereby avoiding any leak of the air flowing into distribution space 14.

Therefore, it is noticed that the support frame 20 has also the function of ensure fluidly tightness between to adjacent voussoirs 10 positioned along longitudinal axis A direction.

Indeed, the two voussoirs 10 can be coupled to respective curved shapes 23 divided by the ridge 24 on a single support frame 20 that divides these latter.

The voussoir 10 defines a plurality of openings 27, 28 in at least one between the inner and outer covers 12, 13 to allow fluidic communication between distribution space 14 and inner space 4, i.e. allowing a delivery flow F'' passing into the inner space 4.

In detail, the voussoir 10 defines a first plurality of openings 27 in proximity of the upper portion 12a and a second plurality of openings 28 in proximity of the lower portion 13a.

In further details, the first plurality of opening 27 comprise circular openings that are aligned along an axis parallel to longitudinal axis A and realized passing the inner cover 12. Similarly, the second plurality of openings 28 is parallel to longitudinal axis A and realized passing the outer cover 13.

Preferably, the second plurality of openings 28 is directed towards the wall 2 while the first plurality of openings 27 is directed towards roof 3, i.e. the second plurality of openings 28 has opening along a transversal axis B direction while the first plurality of opening has opening along the vertical axis C direction.

Advantageously, the inner cover 12 further defines a cantilevered ridge 31 that is housed in proximity of the upper portion 12a. Preferably such cantilevered ridge 31 has a hooked shape, thereby define a housing for possible elements to be carried by the voussoir 10 and extends along longitudinal axis A all along the extension of the inner portion 12.

The first openings 27 are in particular adjacent to the cantilevered ridge 31 and in particular interposed between eh cantilevered ridge and the hook portion 29. Accordingly, first openings 27 are housed in a sort of linear rail defined by the aforementioned elements.

The operation of the embodiment of the invention as described above is the following.

A conditioned airflow F' is provided by the conditioning system 5 towards to the distribution system 6, via feeding unit 7. The airflow F' then passes through openings 8 of the upper portions 7a of the conduits 7', 7'', is accelerated in the intermediate portion 7c thereof and immitted via openings 9', 9'' in the distribution space 4. In particular, due to the peculiar shape and orientation of the openings 9', 9'' the airflow is partitioned to be correctly divided between the front and rear portion of the vehicle. Then, provided conditioned airflow F' may flow out as a delivery airflow F'' through the first and second openings 27, 28. The geometry of the voussoirs 10 and of the support frame 20 allow tightness thereby ensuring a correct distribution via openings 27, 28.

In a maintenance operation of the distribution system 6, if needed, it is necessary to unlock the voussoir 10 from the fixation of the lower portion 13a and then the hinge connection between the hook portion 29 and the curved portion 23 of the support frame 20 allows a quick opening for inspection of distribution space 4 or of the systems that may be housed behind the voussoir 10.

In view of the foregoing, the advantages of the distribution system according to the invention are apparent.

Thanks to the described feeding unit 7, it is possible to divide the airflow between the rear portion and the front portion of the vehicle thereby improving a uniform distribution of this latter.

Moreover, the feeding unit 7 allows to accelerate the provided airflow before introduction of the latter in the distribution space. Such acceleration allows to further improve the distribution of the airflow and also reduce the possibility of accumulation of dirty elements/dust in the conduit and in the distribution space.

The space of the terminal portions of the conduits that allows airtight clearly improves the efficiency of the system both for an energy point of view and with respect to the need of air distribution.

The shape of the voussoir is optimized for allowing a uniform distribution of the air via the openings in the upper and lower portion thereof.

Moreover, the fixation and coupling by hinge connection of the voussoirs to the support frame is economic, simple and allows easy inspection when needed.

Moreover, the realization of the support frame in a single element and of the voussoir in a further single elements decreases manufacturing costs.

It is clear that modifications can be made to the described distribution system which do not extend beyond the scope of protection defined by the claims.

For example, number and position of openings may vary. Similarly, the shape of the portions of the voussoir may be different with respect to the depicted one.

Moreover, the support frame can be realized differently. Clearly, the vehicle may be different with respect to the exemplarily show one.

Furthermore, more feeding unit may be present in correspondence of more conditioning systems, or more than two conduits may be present. Clearly, also the shape of the conduits of the feeding unit may vary.

## Claims

1. Distribution system (6) for distributing an airflow provided by a conditioning system (5) of a vehicle (1) into an inner space (4) of said vehicle (1), said distribution system (6) comprising at least two conduits (7', 7") configured to fluidly connect said conditioning system (5) to a voussoir assembly (10) provided with openings (27, 28) to deliver said airflow to said inner space (4), said at least two conduits (7', 7'') comprising each an upper portion (7a) fluidly connected to said conditioning system (5) for receiving said airflow, a lower portion (7b) fluidly connected to said voussoir assembly (10) and an intermediate portion (7c) connecting said upper and lower portions (7a, 7b), said lower portion (7b) of a rear conduit (7') between said at least two conduit (7', 7") along a longitudinal axis (A) direction of said vehicle defining a single opening (9) for directing said airflow along a rear portion of said voussoir assembly along said longitudinal axis (A), said lower portion (7b) of a front conduit (7") between said at least two conduit (7', 7") along a longitudinal axis (A) direction of said vehicle defining a first and a second openings (9, 9') respectively configured to direct said airflow along a rear portion and a front portion of said voussoir assembly (10) along said longitudinal axis (A).

2. Distribution system according to claim 1, wherein said upper portions (7a) each define at least one opening (8) for allowing passage of said airflow from said conditioning assembly (5).

3. Distribution system according to claim 1 or 2, wherein said single or first and second openings (9, 9') of said lower portions (7b) are defined by respective deflector means (11, 11').

4. Distribution system according to claim 3, wherein said deflector means (11, 11') have a C-shaped portion.

5. Distribution system according to any of the preceding claims, wherein said two conduits (7', 7'') are each realized in a single piece.

6. Distribution system according to any of the preceding claims, wherein said two conduits (7', 7") are each realized in polymeric material.

7. Distribution system according to any of the preceding claims, wherein said intermediate portion (7c) has a S-shape cross-section.

8. Distribution system according to claim 7, wherein said S-shape cross- section extends along a plane defined by transversal and a vertical axes (B, C) perpendicular to said longitudinal axis (A).

9. Distribution system according to any of the preceding claims, wherein said intermediate portion (7c) has a cross-section that is variable between the upper and the lower portions (7a, 7b).

10. Distribution system according to claim 9, wherein the cross-section decreases from the upper portion (7a) to the lower portion (7b).

11. Vehicle (1) comprising a plurality of walls (2) and a roof (3) delimiting an inner space (4) and a conditioning unit (5) carried by said roof (3) and configured to provide a conditioned airflow for said inner space (4), said vehicle (1) comprising a distribution system (6) according to any of the preceding claims.

12. Vehicle according to claim 11, wherein said conduits (7', 7'') are dimensioned to pass through said roof (3).

13. Vehicle according to claim 11 or 12, wherein the shape of said deflector means (11, 11') is function of the relative position of said two conduits (7', 7") along said longitudinal axis (A) of said vehicle (1) on said roof.
